# EUROPEAN PATENT SPECIFICATION

(11) **EP 0 482 610 B1**
(45) Date of publication and mention of the grant of the patent: **21.02.1996**
(21) Application number: 91118072.7
(22) Date of filing: 23.10.1991
(51) Int. Cl.: B62J 35/00, B62J 11/00

(54) **Fuel tank lid assembly of motorcycle**
Kraftstofftankeinrichtung für Motorrad
Dispositif de réservoir à carburant pour motocycle

(30) Priority: 24.10.1990 JP 284131/90; 24.10.1990 JP 284132/90; 24.10.1990 JP 284134/90
(43) Date of publication of application: 29.04.1992
(60) Divisional application: 94103476.1
(73) Proprietor: SUZUKI KABUSHIKI KAISHA, Hamamatsu-Shi, Shizuoka-Ken (JP)
(72) Inventor: Kawasaki, Keizo, Hamamatsu-Shi, Shizuoka-Ken (JP); Shibuya, Izumi, Inasa-Gun, Shizuoka-Ken (JP)
(74) Representative: Klunker . Schmitt-Nilson . Hirsch

(56) References cited:
- EP-A- 323 908
- EP-A- 404 195
- FR-A- 2 510 965
- FR-A- 2 519 928
- FR-A- 2 636 036
- US-A- 4 726 439

## Description

The present invention relates to a motorcycle having a lid assembly for a fuel tank according to the preamble of claim 1, and particularly to a scooter-type vehicle.

In a prior art scooter-type vehicle of this type (EP-A-0 404 195; published after the priority date of this patent) a fuel tank is arranged below a seat, an oil supply port, through which an oil is supplied into a fuel tank, is disposed below the seat, and the oil is supplied into the fuel tank through an opening at the side of the seat.

In a recent design of the scooter-type vehicle, an article accomodation box particularly for accomodating a helmet is arranged below the seat (see EP-A-0 323 908). Such location of the helmet accomodation box below the seat requires to displace the location of the fuel tank elsewhere. If the accomodation box is displaced to a rear portion of the vehicle body, the fuel tank may be disposed inside a seat tail cover behind the seat (FR-A-2 636 036).

In such arrangement of the scooter-type vehicle, a relatively large oil supply opening is formed to an upper portion of the seat tail cover so as to face the oil port of the fuel tank. A fuel tank lid is provided for the oil supply opening to be closed or opened, thus performing the oil supplying.

According to the arrangement of the oil supply opening of the conventional scooter-type vechicle described above, since the large oil supply opening is formed to the top portion of the seat tail cover at the rear portion of the seat, the size of a carrier disposed on the seat tail cover is limited or, hence, it may become difficult to open or close the fuel tank lid and become impossible to supply the oil when a large article is rested on the carrier. In addition, the fuel tank lid is provided with a locking device, independent from a seat lock device, which is operated by key means, for example, so that the assembling of the fuel lid is made to be complicated and the key operation of the locking device is also made troblesome.

In another aspect, since it is necessary to form the fuel tank lid to cover a smooth flat opening of the seat tail cover, the fuel tank lid is also formed to have a flat plane shape. Furthermore, since the locking device is attached to the fuel tank lid, a large rigidity is required for the fuel tank lid. For this reason, in a conventioanl fuel tank lid assembly, a plurality of reinforcing ribs are arranged on the back surface side of the lid to increase the rigidity and strength thereof. However, the location of the plural reinforcing ribs makes complicated the fuel tank lid assembly and involves additional material consumption. Furthermore, in a manufacturing, i.e. molding, process thereof, there may cause burrs or cavities to the fuel lid assembly, thus reducing yielding and being inconvenient.

The object of the present invention is to substantially eliminate defects or drawbacks, encountered in the prior art and to provide a motorcycle having a fuel tank lid assembly, such as scooter-type vehicle, in which elements or parts related to a locking device for locking the fuel lid are assembled on the side of a side cover to thereby easily assemble the fuel lid and open or close the fuel lid, wherein working for providing an independent lid lock mechanism and capable of opening and closing the fuel tank lid is eliminated by commonly utilizing a seat lock assembly.

This is accomplished in accordance with the features of claim 1.

The present invention provides a fuel tank lid assembly having light weight and sufficient rigidity without providing any reinforcing means.

According to the invention, an opening is formed to the side cover at a portion facing an fuel oil supply port of a fuel tank disposed inside the side cover and a fuel tank lid assembly including a fuel tank lid is provided for covering the opening to be opened or closed. The side cover has a rear portion, an upper portion and a side portion continuous to the rear and upper portions through a smooth curved portion, and the fuel tank lid has a curved surface for covering the opening so that an outer surface of the fuel tank lid is substantially made flash with an outer surface of the side cover at which the opening is formed when the fuel tank lid is closed.

The fuel tank lid is provided with an engaging member disposed inside the side cover and the fuel tank lid assemby includes a fuel tank lid locking device which is engaged with the engaging member of the fuel tank lid, the fuel tank lid locking device being arranged inside the side cover.

A side cover is mounted to the rear body of the motorcycle body as a rear cowling, an opening is formed to the rear cowling at a portion facing an fuel oil supply port of a fuel tank disposed inside the rear cowling, the fuel tank lid assembly including the fuel tank lid is provided inside the rear cowling for covering the opening to be opened or closed, and the seat is locked by a seat lock device disposed inside the rear cowling, wherein the seat and the fuel tank lid are selectively locked and unlocked through a lock cable means connecting the fuel tank lid locking device and the seat lock device.

In preferred embodiments of the scooter-type vehicle of the characters described above, the fuel tank lid locking device includes a lid lock bracket secured to the side cover and a lid openner assembly mounted to the lid lock bracket, the lid openner assembly including a pivotal link mechanism. A seal plate is disposed inside the side cover so as to seal, from inside, a gap existing between an inner edge of the opening and an outer peripheral edge of the fuel tank lid. The fuel tank lid is provided with a hinge means for pivotally mounting the fuel tank lid thereabout, the hinge means being hinged to the side cover at one end of the fuel tank lid and the seal plate is mounted to the hinge means.

The seat lock device includes a cylinder key assembly secured to the rear body of the motorcycle, the cylinder key assembly has a cylinder head portion exposed externally, a lid lock arm member and a seat lock arm member, the lid lock arm member and the seat lock member are disposed pivotally in a cylinder body of the cylinder key assembly so as to have a common axis. The lock cable means is connected at one end to the lid lock arm. A key hole into which a key is inserted is formed to the cylinder head portion and the fuel tank lid locking device and the seat lock device is selectively locked and unlocked by rotating the key inserted into the key hole in different directions.

According to the motorcycle of the characters described above, in one aspect, since the opening formed to the side cover at a round portion connecting the side, rear and upper portions of the side cover and the fuel tank lid to cover the opening is also formed so as to have a curved surface in substantially flash with the outer surface of the curved portion of the side cover, the fuel lid has itself rigidity, thus eliminating location of reinforcing rib, for example, to the fuel tank lid, thus making the fuel tank lid thin and light as well as easy molding of the fuel tank lid. Thus, the fuel tank lid working operation can be improved. The location of the seal plate between the opening and the fuel tank lid improves outer appearance thereof.

The fuel tank lid is locked and unlocked by the fuel tank lid locking mechanism disposed inside the side cover which is engaged with an engaging member of the fuel tank lid disposed also inside the side cover, so that the locking members are entirely disposed inside the side cover, thus erroneous operation of the fuel tank lid locking device from the outside of the motorcycle can be prevented and the outer apperance can also be improved.

The fuel tank lid locking device is disposed so as to be commonly operated with the seat lock device, so that the independent location of the fuel tank lid locking device can be eliminated. Accordingly, any member for safely attaching the fuel tank lid locking device can be also eliminated, thus making easy and compact the fuel tank lid and also maiking it posible to construct the fuel tank lid with light weight with reduced working and cost. Furthermore, the fuel tank lid locking device is connected to the seat lock device through the lock cable means so that the seat locking operation and the fuel tank lid locking operation can be selectively performed only by the operation of the key. Accordingly, the locking and unlocking operations of the seat lock device and the fuel tank lid locking device can be easily managed in a smooth manner with no troublesome working.

### BRIEF DESCRIPTION OF THE DRAWINGS

For a better understanding of the present invention and to show how the same is carried out, reference is made, by way of preferred embodiments, to the drawings, in which:
Fig. 1 is a schematic side view of a motorcycle provided with a fuel tank lid assembly according to the present invention;
Fig. 2 is a perspective view of one embodiment of the fuel tank lid assembly according to the present invention;
Fig. 3 is a perspective view of a side cover applied to the motorcycle and provided with the fuel tank lid assembly of Fig. 2;
Fig. 4 is view of the fuel tank lid of Fig. 3, in an enlarged scale;
Fig. 5 is a developed view showing parts and elements constituting the fuel tank lid assembly;
Fig. 6 is a perspective view of a fuel tank lid locking device provided for the fuel tank lid assembly;
Fig. 7 is a view, partially broken away, of a cable means provided for the fuel tank lid locking device of Fig. 6;
Fig. 8 is a schematic view of a cylinder key assembly for carrying out a fuel tank lid locking operatin;
Fig. 9 is an elevational section of the cylinder key assembly of Fig. 8;
Fig. 10 is a view of the cylinder key assembly viewed from the head side thereof;
Fig. 11 is a sectional view of a seat locking mechanism of the cylinder key assembly; and
Fig. 12 is a sectional view of a lid lock mechanism of the cylinder key assembly.

### DESCRIPTION OF THE PREFERRED EMBODIMENTS

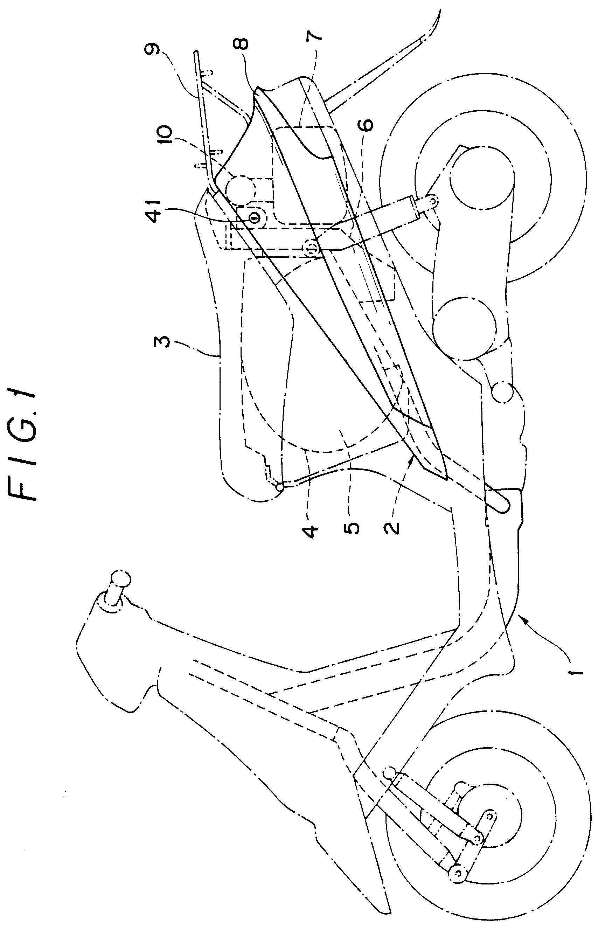

Fig. 1 shows a schematic view of a scooter-type vehicle provided with a fuel tank lid assembly according to the present invention. The scooter-type vehicle is provided with a vehicle body 1 including a rear body 2 on which a seat 3 is disposed to be capable of being opened and closed. An article accommodation box or chamber 5 for especially accommodating a helmet 4 or the like is disposed below the seat 3, and an oil tank 6 and a fuel tank 7 are arranged behind the article accommodation box 5.

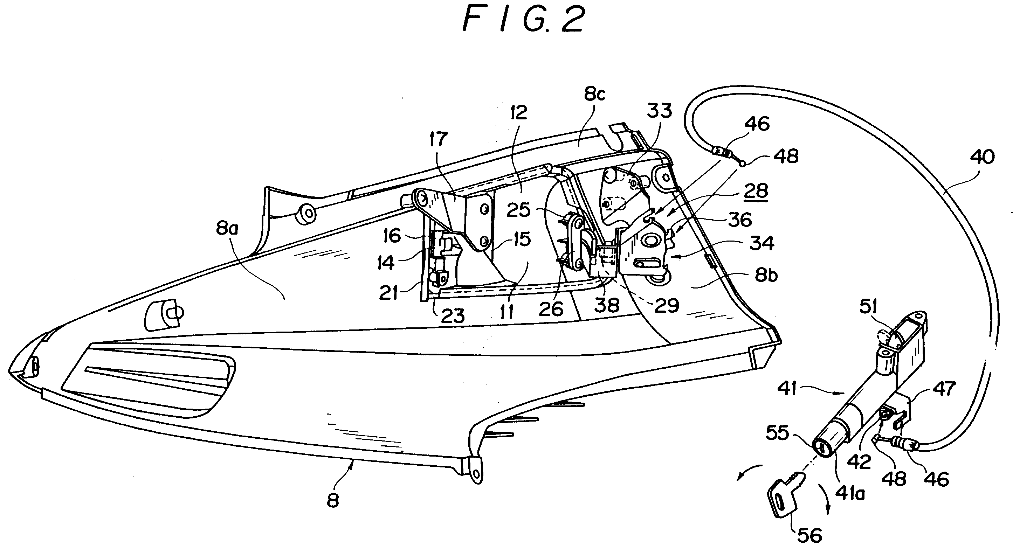

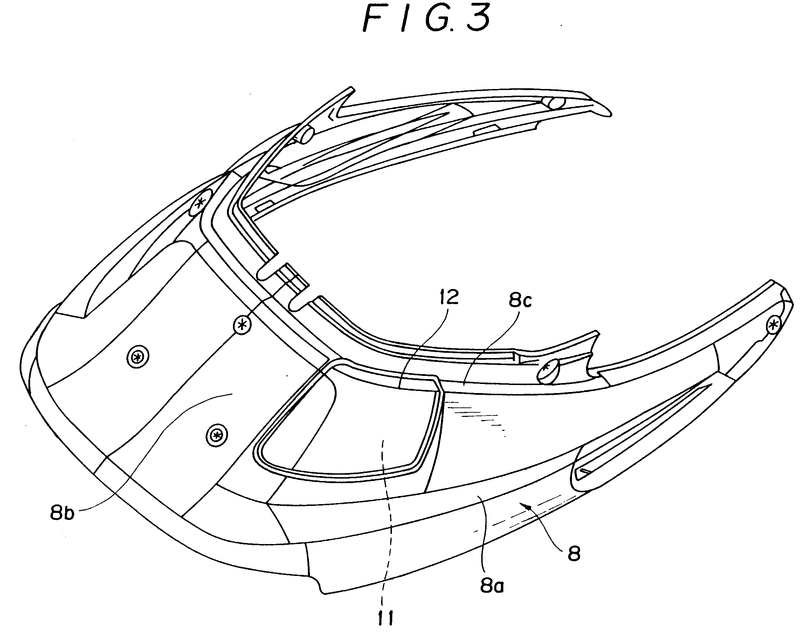

A side cover 8, having a structure splittable into lateral two parts, is mounted to the rear body 2 of the vehicle body 1 as shown in Fig. 2 or 3, the side cover 8 constituting a rear cowling of the vehicle. The fuel tank 7 is disposed inside the side cover 8 and a carrier 9 is disposed above the fuel tank 7. The carrier 9 is fixed to the rear body 2 to maintain the strength thereof.

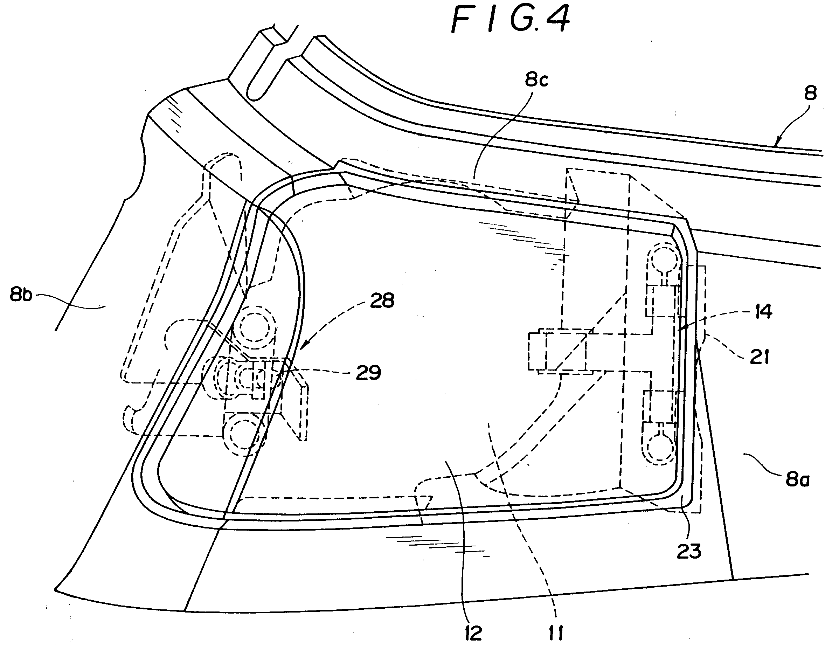

To the side cover 8 is formed an oil supply opening 11 at a portion facing an oil port 10 of the fuel tank 7 and the opening 11 is formed for the access to the oil port 10 of the fuel tank 7 and covered with a lid 12, which is called hereinlater a fuel tank lid 12. As shown in Figs. 3 and 4, the side cover 8 comprises a side portion 8a, a rear portion 8b and an upper portion 8c and the opening 11 is positioned to a curved portion of the rear and upper portions 8b and 8c continuous to the side portion 8a. The fuel tank lid 12 for covering the opening 11 is formed so as to have a smooth curved shape substantially flash with the curved shape of the side cover 8. Such curved shape of the fuel tank lid 12 increases its rigidity to strengthen the same. Accordingly, it is not necessary to form reinforcing ribs to the fuel tank lid 12 as made in the conventional lid, thus eliminating the consumption of the material therefor.

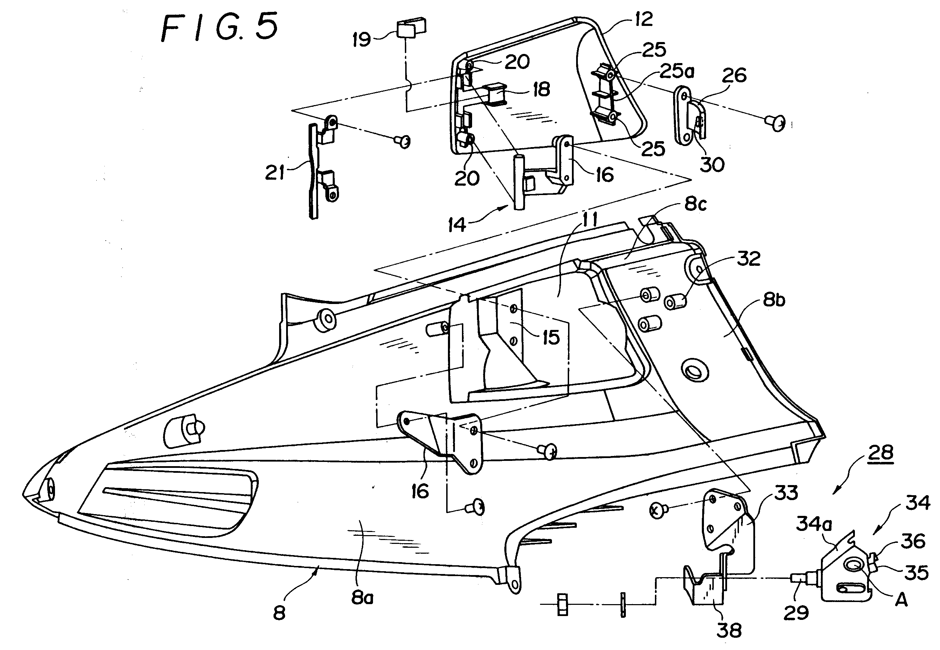

As shown in Figs. 2, 4 and 5, the fuel tank lid 12 is opened and closed by means of a lid hinge device 14. The lid hinge device 14 comprises a bridge member 15 secured so as to span one side (front side) of the opening 11 from the inside and a lid hinge member 16 secured to the bridge member 15. One side (front side) of the fuel tank lid 12 is hinged to the hinge member 16, and the bridge member 15 is reinforced by a lid bracket 17 secured inside the side cover 8.

A spring receptacle seat member 18 is attached to the central portion of the front side of the fuel tank lid 12 and a spring 19 such as plate spring is mounted to the spring receptacle seat member 18 so that the fuel tank lid 12 is always urged by the spring 19 in a direction opening the fuel tank lid 12.

A pair of attachment bosses 20 are integrally disposed on both sides of the hinge connecting portion of the fuel tank lid 12 and a seal plate 21 made of an elastic material such as rubber is secured to the attachment bosses 20. The seal plate 21 is disposed so as to cover a gap 23 between the inner edge of the opening 11 of the side cover 8 and the outer peripheral edge of the fuel tank lid 12 from the inside thereof, thus improving an outer apperance of the attachment of the fuel tank lid 12.

A pair of attachment bosses 25 are located on the other side (rear side) of the fuel tank lid 12 and these attachement bosses 25 are interconnected by a reinforcing rib 25a in a standing manner. An engaging hook member 26 is secured to the attachment bosses 25 at its one end and an engaging hole 30 to be engaged with a lock pin 29 of a fuel tank lid locking device 28 is formed to the other end of the engaging hook member 26. The fuel tank lid locking device 28 constitutes a lid lock assembly for the fuel tank lid 12.

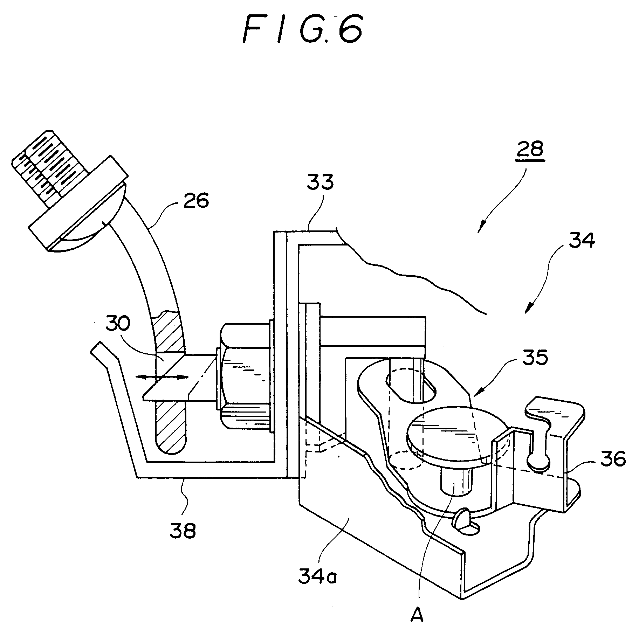

The fuel tank lid locking device 28 comprises, as best shown in Fig. 6, a lid lock bracket 33 secured to a plurality of attachment bosses 32 provided inside the rear portion of the side cover 8 in a standing manner and a lid opener assembly 34 mounted to the lid lock bracket 33. The lid opener assembly 34 includes a pivotal link mechanism 35 including a link lever 36 pivotal about a support pin A and the link mechanism 35 is connected to the lock pin 29 so that the lock pin 29 is projected and retracted by the swing motion of the link lever 36. The link lever 36 always urges the lock pin 29 by a spring member, not shown, so as to take a projected lock position. A guide bracket 38 having substantially U-shape in section is formed or secured integrally with the lid lock bracket 33, and the engaging hook member 26 secured to the fuel tank lid 12 is guided by the guide bracket 38 to prevent the engaging hook 26 from disengaging in the locking condition.

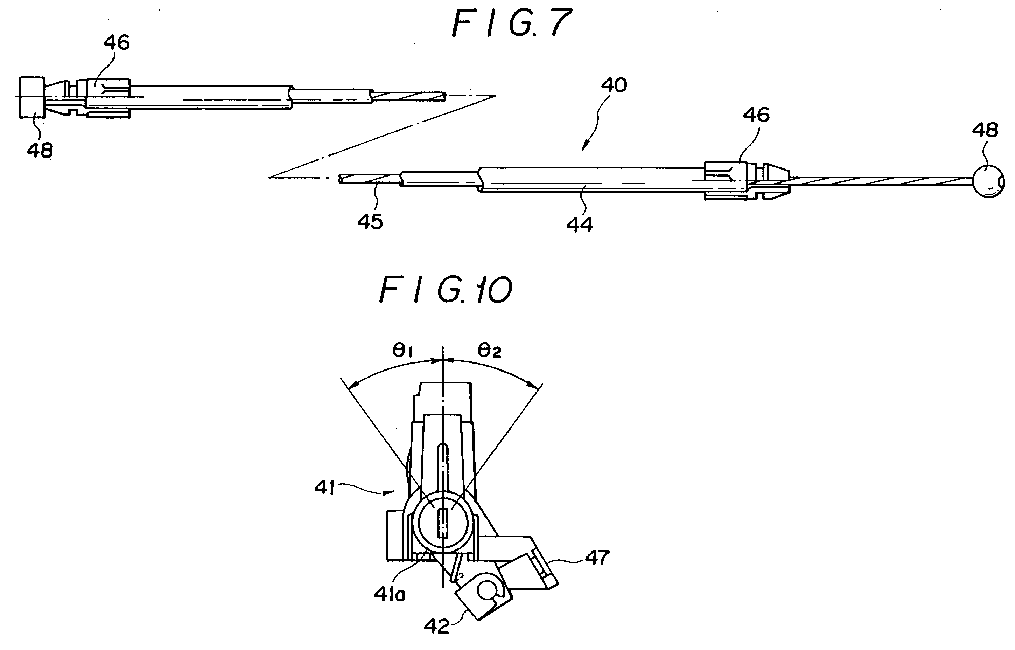

As shown in Figs. 2 and 7, the link mechanism 35 of the fuel tank lid locking device 28 is operatively connected, through a lock cable 40, to a lid lock arm 42 of a cylinder key assembly 41 constituting a seat locking device. The cable 40 is composed of an outer casing 44 and an inner cable 45 slidably accommodated inside the outer casing 44. Both the ends of the outer casing 44 are closed by casing caps 46 which are mounted, at one end, to a fixing casing 34a of the lid opener assembly 34 and, at the other end, to a fixing bracket 47 of the cylinder key assembly 41. Expanded end members 48 are mounted to both the ends of the inner cable 45 extending outward from both the ends of the outer casing 44, and the expanded end members 48 are engaged with the lid lock arm 42 of the cylinder key assembly 41 and the link lever 36 of the lid opener assembly 28, respectively.

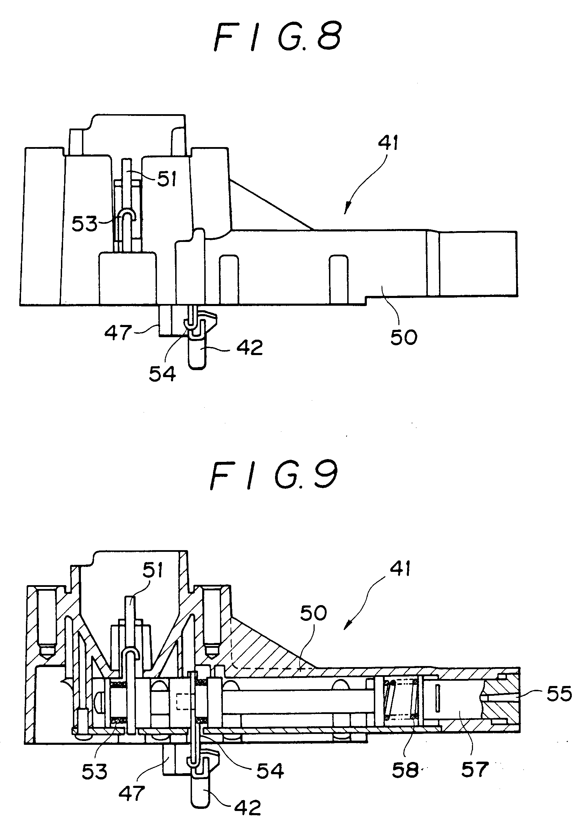

The cylinder key 41 is mounted in the rear body 2 of the vehicle body 1 and a head portion 41a of the cylinder key assembly 41 is exposed externally from the side cover 8 as shown in Fig. 1. The cylinder key assembly 41 has an inner structure such as shown in Fig. 9, in which a seat lock arm (locking powl) 51 and the lid lock arm 42 are supported to be relatively rotatable in a cylinder body of the cylinder key assembly 41. Both the arms 42 and 51 are disposed on a common axial line and always urged toward the lock position sides by means of spring.

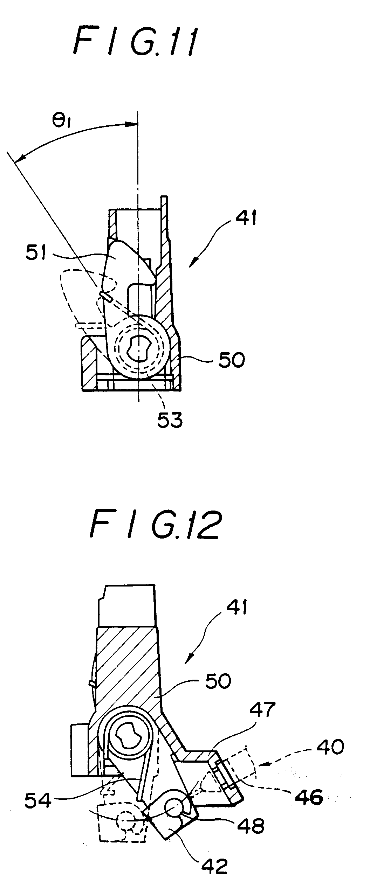

The seat lock arm 51 is engaged with an engaging member, not shown, such as engaging hook, secured to the seat rear portion which is to be opened and closed to thereby limit the opening and closing the seat 3. When it is required to open the seat 3, a key 56 (Fig. 2) is inserted into a key hole 55 of the cylinder key assembly 41 and the key 56 is then rotated in a counterclockwise direction in Fig. 10 by a predetermined angle θ₁, for example, about 35°. Then, the seat lock arm 51 is swung through a tumbler 57 from the locking position shown by a solid line in Fig. 11 to the unlocking position shown by a broken line, thus releasing the seat lock arm 51 and hence opening the seat 3. The key 56 is automatically returned to the original position by the spring force of the lock spring 53 after the releasing of the seat lock arm 51.

The tumbler 57 is always urged toward a push-out side in the cylinder block 50 of the cylinder key assembly 41 by a push-out spring 58, and when the key 56 is inserted and pushed into the key hole 55, the tumbler 57 is displaced and the key 56 is operatively connected to the lid lock arm side through the tumbler 57.

Under this state, when the key is rotated in the clockwise direction by a predetermined angle θ₂, for example, about 35°, as shown in Fig. 10, the lid lock arm 42 is swung from the locking position shown by a solid line in Fig. 12 to the unlocking position shown by a broken line. This swinging force is transmitted to the link mechanism 35 of the lid opener assembly 34 through the cable 40, thereby rotating the link lever about the support pin A and hence retracting the lock pin 29 from the locking position to the unlocking position shwon by a broken line in Fig. 6.

According to the retraction of the lock pin 29 to the unlocking position, the fuel tank lid device 28 is opened and the fuel tank lid 12 is also opened by the action of the spring 19, thus enabling the oil supply into the fuel tank 7.

When the key 56 is released, the tumbler 57 is automatically returned by means of a return spring 54 engaged with the lid lock arm 42 and then to the original position by the action of the push-out spring 58. In this time, the link lever 36 of the lid opener assembly 34 is automatically returned by the spring force of a lock spring, not shown, and the lock pin 29 is automatically set to the lock position side.

In the fuel tank lid device according to the present invention, the fuel tank lid 12 mounted to the side cover of the motorcycle is also opened and closed by one cylinder key assembly 41 also carrying out the seat locking operation. In such case, the fuel tank lid 12 is attached to the rear side of the side cover 8, so that the opening and closing operations of the fuel tank lid 12 can be freely performed regardless of volume of an article rested on the carrier 9.

The oil supply to the oil tank 6 is done by opening the seat 3.

In the described embodiment, the fuel tank lid and the seat are selectively opened by rotating the cylinder key assembly in the clockwise or counterclockwise direction, but the cylinder key assembly may be composed of a multi-stage cylinder key assembly for carrying out the opening operations of the fuel tank lid and the seat in different stage.

It is to be understood that the present invention is not limited to the described embodiments and many other changes and modifications may be made without departing from scopes of the appended claims.

## Claims

1. A motorcycle having a fuel tank lid assembly, in which a side cover (8) is mounted to a rear body (2) of a motorcycle body (1), and a seat (3) which is locked by a seat lock device (41, 41a, 42, 51) disposed inside the side cover (8), an opening (11) is formed to the side cover (8) at a portion facing a fuel oil supply port (10) of a fuel tank (7) disposed inside the side cover (8), and a fuel tank lid assembly including a fuel tank lid (12) is provided for covering the opening (11) to be opened or closed, wherein the fuel tank lid (12) is provided with an engaging member (26, 30) disposed inside the side cover (8) and the fuel tank lid assembly includes a fuel tank lid locking device (28) which is engaged with the engaging member (26, 30) of the fuel tank lid (12), the fuel tank lid locking device (28) being arranged inside the side cover (8) **characterized in that** said fuel tank lid locking device (28) is connected to the seat lock device (41, 41a, 42, 51) through a lock cable means (40), the seat lock device (41, 41a, 42, 51) includes a cylinder key assembly (41) secured to the rear body (2), a cylinder head portion (41a) exposed externally, a lid lock arm (42) and a seat lock arm (51), the lid lock arm (42) and the seat lock arm (51) are disposed pivotally in a cylinder body (50) so as to have a common axis, and the cylinder head portion (41a) has a key hole (55) into which a key is inserted, the seat lock device (41, 41a, 42, 51) and the fuel tank lid locking device (28) are selectively locked and unlocked by rotating the key inserted into the key hole (55) in different directions.

2. A motorcycle having a fuel tank lid assembly of claim 1, wherein the fuel tank lid (12) has a curved surface for covering the opening (11) so that an outer surface of the fuel tank lid (12) is substantially made flash with an outer surface of the side cover (8) at which the opening (11) is formed when the fuel tank lid (12) is closed.

3. A motorcycle having a fuel tank lid assembly according to claim 1 or 2 wherein a seal plate (21) is disposed inside the side cover (8) so as to seal, from inside, a gap (23) existing between an inner edge of the opening (11) and an outer peripheral edge of the fuel tank lid (12).

4. A motorcycle having a fuel tank lid assembly according to any of claims 1 to 3, wherein the fuel tank lid (12) is hinged to the side (8) cover at one end thereof so as to be pivotally opened or closed about a hinged portion (14).

5. A motorcycle having a fuel tank lid assembly according to any of claims 1 to 4, wherein the fuel tank lid locking device (28) includes a lock pin (29) and the engaging member is a hook member (26) provided with a hole (30) with which the lock pin (29) is engaged.

6. A motorcycle having a fuel tank lid assembly according to claim 5, wherein the fuel tank lid locking device (28) further includes a lid lock bracket (33) secured to the side cover (8) and a lid opener assembly (34) mounted to the lid lock bracket (33), the lid opener assembly (34) including a pivotal link mechanism (35) operatively connected to the lock pin (29).

## Patentansprüche

1. Motorrad mit einer Kraftstofftankdeckelanordnung, bei der an einer hinteren Karosserie (2) einer Motorradkarosserie (1) eine seitliche Abdeckung (8) ebenso montiert ist wie ein Sitz (3), der von einer Sitzschloßeinrichtung (41, 41a, 42, 51) abgesperrt ist, die sich im Inneren der seitlichen Abdeckung (8) befindet, wobei eine Öffnung (11) in der seitlichen Abdeckung (8) an einem Abschnitt ausgebildet ist, der einem Kraftstofföleinlaß (10) eines Kraftstofftanks (7) im Inneren der seitlichen Abdeckung (8) zugewandt ist, und eine Kraftstofftankdeckelanordnung mit einem Kraftstofftankdeckel (12) vorgesehen ist, um die Öffnung (11) abzudecken, so daß sie geöffnet oder geschlossen werden kann, wobei der Kraftstofftankdeckel (12) mit einem Eingriffsglied (26, 30) ausgestattet ist, welches sich im Inneren der seitlichen Abdeckung (8) befindet, und die Kraftstofftankdeckelanordnung eine Kraftstofftankdeckel-Verriegelungseinrichtung enthalt, die mit dem Eingriffsglied (26, 30) des Kraftstofftankdeckels (12) in Eingriff steht, wobei die Kraftstofftankdeckel-Verriegelungseinrichtung (28) im Inneren der seitlichen Abdeckung (8) angeordnet ist,
**dadurch gekennzeichnet**,
daß die Kraftstofftankdeckel-Verriegelungseinrichtung (28) mit der Sitzschloßeinrichtung (41, 42a, 42, 51) über einen Schließkabelzug (40) verbunden ist, die Sitzschloßeinrichtung (41, 41a, 42, 51) eine Zylinderschloßanordnung (41) besitzt, die an der hinteren Karosserie (2) befestigt ist, ferner einen Zylinderkopfabschnitt (41a), der nach außen freiliegt, einen Deckelsperrarm (42) und einen Sitzsperrarm (51), von denen der Deckelsperrarm (42) und der Sitzsperrarm (51) verdrehbar in einem Zylinderkörper (50) mit einer gemeinsamen Achse angeordnet sind, und der Zylinderkopfabschnitt (41a) ein Schlüsselloch (55) zum Einführen eines Schlüssels aufweist, die Sitzschloßeinrichtung (41, 41a, 42, 51) und die Kraftstofftankdeckel-Verriegelungseinrichtung (28) selektiv durch Drehen des in das Schlüsselloch (55) eingeführten Schlüssels in verschiedene Richtungen selektiv verriegelt oder entriegelt werden.

2. Motorrad mit einer Kraftstofftankdeckelanordnung nach Anspruch 1, bei dem der Kraftstofftankdeckel (12) eine gekrümmte Oberfläche aufweist, um die Öffnung (11) derart abzudecken, daß eine Außenfläche des Kraftstofftankdeckels (12) im wesentlichen bündig ist mit einer Außenfläche der seitlichen Abdeckung (8), an der die Öffnung (11) ausgebildet ist, wenn der Kraftstofftankdeckel (12) geschlossen ist.

3. Motorrad mit einer Kraftstofftankdeckelanordnung nach Anspruch 1 oder 2, bei der eine Dichtungsplatte (21) im Inneren der seitlichen Abdeckung (8) angeordnet ist, um von innen her eine Lücke (23) abzudichten, die zwischen einer Innenkante der Öffnung (11) und einer äußeren Umfangskante des Kraftstofftankdeckels (12) vorhanden ist.

4. Motorrad mit einer Kraftstofftankdeckelanordnung nach einem der Ansprüche 1 bis 3, bei dem der Kraftstofftankdeckel (12) mittels Scharnier an der seitlichen Abdeckung (8) an deren einem Ende derart angebracht ist, daß er um einen Scharnierabschnitt (14) in Offen- oder in Schließstellung verschwenkt werden kann.

5. Motorrad mit einer Kraftstofftankdeckelanordnung nach einem der Ansprüche 1 bis 3, bei dem die Kraftstofftankdeckel-Verriegelungseinrichtung (28) einen Verriegelungszapfen (49) aufweist, und das Eingriffsglied ein Hakenglied (26) ist, welches mit einem Loch (30) versehen ist, mit welchem der Verriegelungszapfen (29) in Eingriff gelangt.

6. Motorrad mit einer Kraftstofftankdeckelanordnung nach Anspruch 5, bei dem die Kraftstofftankdeckel-Verriegelungseinrichtung (28) außerdem einen Deckelschloßträger (33) aufweist, der an der seitlichen Abdeckung (8) angebracht ist, und eine Deckelöffneranordnung (34) besitzt, die an dem Deckelschloßträger (33) gelagert ist, wobei die Deckelöffneranordnung (34) einen schwenkbaren Gestängemechanismus (35) aufweist, der mit dem Verriegelungszapfen (29) gekoppelt ist.

## Revendications

1. Motocycle comportant un ensemble de couvercle de réservoir de carburant, dans lequel une enveloppe latérale (8) est montée sur un corps arrière (2) d'un corps de motocycle (1), et un siège (3) qui est verrouillé par un dispositif de verrouillage de siège (41, 41a, 42, 51) disposé dans l'enveloppe latérale (8), une ouverture (11) est formée dans l'enveloppe latérale (8) à une portion donnant sur un orifice de distribution de carburant (10) d'un réservoir de carburant (7) disposé dans l'enveloppe latérale (8), et un ensemble de couvercle de réservoir de carburant comprenant un couvercle de réservoir de carburant (12) est prévu pour couvrir l'ouverture (11) à ouvrir ou fermer, dans lequel" le couvercle de réservoir de carburant (12) est doté d'un organe d'engagement (26, 30) disposé dans l'enveloppe latérale (8) et l'ensemble de couvercle de réservoir de carburant comprend un dispositif de verrouillage de couvercle de réservoir de carburant (28) qui est engagé avec l'organe d'engagement (26, 30) du couvercle de réservoir de carburant (12), le dispositif de verrouillage de couvercle de réservoir de carburant (28) étant disposé dans l'enveloppe latérale (8), caractérisé en ce que ledit dispositif de verrouillage de couvercle de réservoir de carburant (28) est relié au dispositif de verrouillage de siège (41, 41a, 42, 51) via un moyen de câble de verrouillage (40), le dispositif de verrouillage de siège (41, 41a, 42, 51) comprend un ensemble de clé cylindrique (41) fixé au corps arrière (2), une portion de tête cylindrique (41a) exposée extérieurement, un bras de verrouillage de couvercle (42) et un bras de verrouillage de siège (51), le bras de verrouillage de couvercle (42) et le bras de verrouillage de siège (51) sont disposés de manière à pivoter dans un corps cylindrique (50) afin d'avoir un axe commun, et la portion de tête cylindrique (41a) comporte un trou de serrure (55) dans lequel une clé est insérée, le dispositif de verrouillage de siège (41, 41a, 42, 51) et le dispositif de verrouillage de couvercle de réservoir de carburant (28) sont verrouillés et déverrouillés sélectivement en tournant la clé insérée dans le trou de serrure (55) dans des directions différentes.

2. Motocycle comportant un ensemble de couvercle de réservoir de carburant selon la revendication 1, dans lequel le couvercle de réservoir de carburant (12) comporte une surface courbe pour couvrir l'ouverture (11) de manière qu'une surface externe du couvercle de réservoir de carburant (12) soit sensiblement de niveau avec une surface externe de l'enveloppe latérale (8) à laquelle l'ouverture (11) est formée lorsque le couvercle de réservoir de carburant (12) est fermé.

3. Motocycle comportant un ensemble de couvercle de réservoir de carburant selon la revendication 1 ou 2, dans lequel une plaque d'étanchéité (21) est disposée dans l'enveloppe latérale (8) afin d'obturer hermétiquement, de l'intérieur, un espace (23) existant entre un bord interne de l'ouverture (11) et un bord périphérique externe du couvercle de réservoir de carburant (12).

4. Motocycle comportant un ensemble de couvercle de réservoir de carburant selon l'une quelconque des revendications 1 à 3, dans lequel le couvercle de réservoir de carburant (12) est articulé sur l'enveloppe latérale (8) à une de ses extrémités afin d'être ouvert ou fermé par pivotement sur une portion articulée (14).

5. Motocycle comportant un ensemble de couvercle de réservoir de carburant selon l'une quelconque des revendications 1 à 4, dans lequel le dispositif de verrouillage de couvercle de réservoir de carburant (28) comprend une goupille de verrouillage (29) et l'organe d'engagement est un organe en crochet (26) doté d'un orifice (30) avec lequel la goupille de verrouillage (29) est engagée.

6. Motocycle comportant un ensemble de couvercle de réservoir de carburant selon la revendication 5, dans lequel le dispositif de verrouillage de couvercle de réservoir de carburant (28) comprend en outre un étrier de verrouillage de couvercle (33) fixé à l'enveloppe latérale (8) et un ensemble d'ouverture de couvercle (34) monté sur l'étrier de verrouillage de couvercle (33), l'ensemble d'ouverture de couvercle (34) comprenant un mécanisme de raccordement pivotant (35) fonctionnellement coupé à la goupille de verrouillage (29).
